# EUROPÄISCHE PATENTSCHRIFT

(11) **EP 1 253 103 B1**
(45) Veröffentlichungstag und Bekanntmachung des Hinweises auf die Patenterteilung: **29.08.2007**
(21) Anmeldenummer: 02008750.8
(22) Anmeldetag: 18.04.2002
(51) Int. Cl.: B66F 9/075, B60G 17/04, B60G 9/02

(54) **Flurförderzeug mit einer federnd aufgehängten Lenkachse**
Industrial truck with a resilient suspended steering axle
Chariot de manutention avec un essieu directeur suspendu élastiquement

(30) Priorität: 26.04.2001 DE 10120598
(43) Veröffentlichungstag der Anmeldung: 30.10.2002
(73) Patentinhaber: STILL GMBH, 22113 Hamburg (DE)
(72) Erfinder: Bavendiek, Rainer, Dr., 21465 Wentorf (DE); Biermann, Thorsten, 22043 Hamburg (DE); Bruns, Rainer, Prof.-Dr., 22395 Hamburg (DE)
(74) Vertreter: Geirhos, Johann

(56) Entgegenhaltungen:
- DE-A1- 19 732 400
- GB-A- 851 121
- GB-A- 2 061 841
- US-A- 3 168 956
- US-A- 3 497 231

## Beschreibung

Die Erfindung betrifft ein Flurförderzeug, insbesondere Gegengewichts-Gabelstapler, mit einer Lenkachse, die an einer Längsschwinge befestigt und zusammen mit dieser um eine Fahrzeug-Querachse schwenkbar ist, wobei die Längsschwinge eine Führung aufweist, die über einen rotatorischen Freiheitsgrad in Bezug auf eine Fahrzeug-Längsachse verfügt.

Ein gattungsgemäßes Flurförderzeug ist aus der DE 197 32 400 A1 bekannt. Durch die besondere Art der Aufhängung und Führung der Lenkachse kann das Fahrzeugniveau reguliert werden, um eine horizontale Fahrzeugposition auch unter schwerer Beladung beibehalten zu können. Hierbei ist die heckseitig angeordnete Lenkachse an einem Stützjoch pendelnd gelagert, dessen Vertikalposition zum Fahrzeugrahmen mittels eines hydraulischen Zylinders verändert werden kann. Die zum Ausgleich von Unebenheiten der Fahrbahnoberfläche vorgesehene Pendelbewegung der Achse bleibt dabei unbeeinflusst.

Der vorliegenden Erfindung liegt die Aufgabe zu Grunde, ein verbessertes Flurförderzeug der eingangs genannten Art zur Verfügung zu stellen, das einen hohen Fahrkomfort und eine hohe Fahrsicherheit aufweist.

Diese Aufgabe wird erfindungsgemäß dadurch gelöst, dass die Lenkachse beiderseits der Fahrzeug-Längsachse jeweils mittels eines elastischen Kraftübertragungs-Elements am Fahrzeugrahmen oder einem mit dem Fahrzeugrahmen verbundenen Stützrahmen abgestützt ist.

Der Begriff "Fahrzeugrahmen" umfasst im Fall eines Gegengewichts-Gabelstaplers selbstverständlich auch das Gegengewicht. Die Lenkachse und/oder die Kraftübertragungs-Elemente können also auch am Gegengewicht auf die erfindungsgemäße Weise befestigt sein.

Durch die Erfindung wird eine gefederte Führung der Lenkachse erzielt. Hierbei kann die Vertikalbewegung der an der Lenkachse angebrachten Räder voneinander unabhängig erfolgen, woraus ein verbesserter Fahrkomfort resultiert. Femer kann die Federbewegung der Räder beeinflusst werden, um in bestimmten Fahrzuständen die Fahrstabilität zu erhöhen. Der Aufbau des Systems ist dabei robust und genauso einfach wie bei den bekannten Flurförderzeugen des Standes der Technik.

Zweckmäßigerweise ist das Kraftübertragungs-Element jeweils im Bereich des Achsendes mit der Lenkachse verbunden. Dadurch ergibt sich ein großer Hebelarm, an dem das Kraftübertragungs-Element angreift, so dass die Abstützkräfte minimiert werden.

Gemäß einer vorteilhaften Ausgestaltung der Erfindung ist das Kraftübertragungs-Element blockierbar, insbesondere hydraulisch blockierbar. In bestimmten Fahrsituationen kann die Standsicherheit des Flurförderzeuges durch Blockieren der elastischen Kraftübertragungs-Elemente erhöht werden. Die Lenkachse wird dabei gegenüber dem Fahrzeugrahmen gewissermaßen "verriegelt".

Sofern das Kraftübertragungs-Element längenverstellbar, insbesondere hydraulisch längenverstellbar ist, kann der Abstand des Fahrzeugrahmens zur Fahrbahn im Bereich der Lenkachse variiert werden. In Flurförderzeugen, die mit einem frontseitigen Hubgerüst ausgestattet sind und deren Lenkachse heckseitig angeordnet ist, kann dabei auf eine Neigevorrichtung des Hubgerüstes verzichtet werden. Darüber hinaus erübrigt sich dann eine aufwendige Lagerung des Hubgerüstes, das folglich auf einfache Weise fest mit dem Fahrzeugrahmen verbunden werden kann.

Es ist ferner günstig, wenn die Federsteifigkeit und/oder die Dämpfungskonstante des Kraftübertragungs-Elements einstellbar ist. Durch Änderung dieser beiden Parameter können die Elastizitäts- bzw. Schwingungseigenschaften des Kraftübertragungs-Elements an den jeweiligen Fahr- und Beladungszustand des Flurförderzeugs optimal angepasst werden.

Zweckmäßigerweise ist das Kraftübertragungs-Element als Feder-Dämpfer-Einheit ausgebildet. Dabei handelt es sich im Prinzip um ein hydraulisches Zylinder-Kolben-Aggregat mit integrierter Dämpfungsvorrichtung und mit parallel geschalteter Feder, beispielsweise ein Federbein.

Eine Ausgestaltung der Erfindung sieht vor, dass die Führung als Drehführung ausgebildet ist, die eine Statoreinheit und eine relativ dazu um die Fahrzeug-Längsachse drehbare Rotoreinheit aufweist, wobei die Rotoreinheit mit der Lenkachse und die Statoreinheit mit dem Fahrzeugrahmen verbunden ist.

Hierbei kann die Statoreinheit mittels eines Gelenks, durch das sich die Fahrzeug-Querachse erstreckt, mit dem Fahrzeugrahmen verbunden sein.

Das Gelenk kann in der üblichen Weise ausgebildet sein, und z. B. einen die Statoreinheit durchdringenden Querzapfen aufweisen, dessen Mittellinie koaxial mit der Fahrzeug-Querachse ist und der in zwei seitlichen Lagerböcken abgestützt ist, die mit dem Fahrzeugrahmen verbunden sind.

Eine bezüglich eines geringen Bauaufwandes günstige Ausführung der Drehführung sieht vor, dass die Rotoreinheit eine hohlzylindrische Ausnehmung aufweist, in der ein zylindrischer Zapfen der Statoreinheit gelagert ist.

In Umkehr dieses Prinzips ist es jedoch auch möglich, dass die Rotoreinheit einen zylindrischen Zapfen aufweist, der in einer hohlzylindrischen Ausnehmung der Statoreinheit gelagert ist.

Weitere Vorteile und Einzelheiten der Erfindung werden anhand des in den schematischen Figuren dargestellten Ausführungsbeispieles näher erläutert. Dabei zeigt
- Figur 1: eine perspektivische Ansicht des heckseitigen Rahmenabschnitts eines erfindungsgemäßen Flurförderzeugs,
- Figur 2: eine perspektivische Ansicht des heckseitigen Rahmenabschnitts einer ersten Variante des erfindungsgemäßen Flurförderzeugs und
- Figur 3: eine perspektivische Ansicht des heckseitigen Rahmenabschnitts einer zweiten Variante des erfindungsgemäßen Flurförderzeugs.

Das erfindungsgemäße Flurförderzeug ist bevorzugt als Gegengewichts-Gabelstapler ausgebildet, der einen Fahrzeugrahmen 1 und im vorliegenden Ausführungsbeispiel eine heckseitige Lenkachse 2 aufweist. An den Achsenden der Lenkachse 2 ist jeweils ein Rad 3 angeordnet, von denen in den Figuren nur eines dargestellt ist.

Die Lenkachse 2 besteht aus einem Achskörper 4, an dem eine Lenkeinheit 5 (hier: Lenkzylinder) und Spurstangen 6 angebracht sind. An beiden Achsenden ist jeweils ein lenkbarer Radträger 7 befestigt.

Die Lenkachse 2 ist an einer zentral angeordneten Längsschwinge 8 befestigt, die mit einer quer angeordneten Aufnahme 1a des Fahrzeugrahmens 1 so verbunden ist, dass die Längsschwinge 8 samt Lenkachse 2 um eine Fahrzeug-Querachse schwenken kann. Zu diesem Zweck ist die Längsschwinge 8 mittels eines Gelenks 9 mit der Aufnahme 1a bzw. dem Fahrzeugrahmen 1 verbunden. Das Gelenk 9 besteht aus zwei Lagerböcken 9a und 9b, die mit der Aufnahme 1a verbunden sind, und einem Querzapfen 10, der die Längsschwinge 8 mit den Lagerböcken 9a und 9b gelenkig verbindet und dessen Mittellinie demzufolge die Fahrzeug-Querachse bildet, um die die Längsschwinge 8 und die Lenkachse 2 schwenkbar sind.

In die Längsschwinge 8 ist eine Drehführung integriert, die als Pendellagerung der Lenkachse 2 dient. Die Drehführung besteht aus einer Statoreinheit 11a und einer Rotoreinheit 11b, die relativ zu der Statoreinheit 11a um eine Fahrzeug-Längsachse drehbar ist. Die Statoreinheit 11 a stellt dabei denjenigen Abschnitt der Längsschwinge 8 dar, der in der oben beschriebenen Weise mit dem Fahrzeugrahmen 1 verbunden ist, während die Rotoreinheit 11 b mit der Antriebsachse 2 verbunden ist.

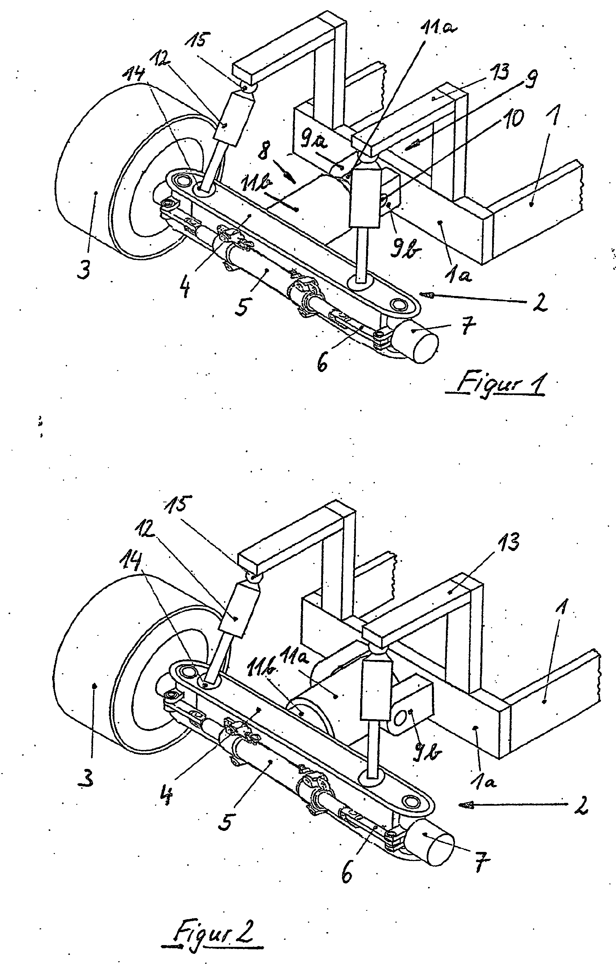

Im Ausführungsbeispiel nach Figur 1 ist die Statoreinheit 11a als Zapfen ausgebildet, der in eine hohlzylindrische Ausnehmung der Rotoreinheit 11b hineinragt und auf dem die Rotoreinheit 11b drehbar gelagert ist.

Zur Aufnahme von auf die Lenkachse 2 bzw. die Räder 3 einwirkenden Vertikalkräften ist die Lenkachse 2 in allen Ausführungsbeispielen an den Achsenden mittels jeweils eines linear wirksamen, elastischen Kraftübertragungs-Elements 12 an einem Stützrahmen 13 abgestützt, der an der Aufnahme 1a des Fahrzeugrahmens 1 befestigt ist. Selbstverständlich ist es auch möglich, die Stützrahmen 13 zusätzlich oder alternativ an anderen geeigneten Stellen des Fahrzeugrahmens 1 zu befestigen. Die Kraftübertragungs-Elemente 12 können auch an einem in den Figuren nicht dargestellten Gegengewicht des Gabelstaplers angelenkt werden.

Die Kraftübertragungs-Elemente 12 sind bevorzugt als Feder-Dämpfer-Einheiten ausgebildet und bestehen jeweils aus einem hydraulischen Zylinder-Kolben-Aggregat mit integrierter Dämpfung und parallel geschalteter, im vorliegenden Ausführungsbeispiel ebenfalls integrierter Feder (z. B. Gasfeder). Die Verbindung zu der Lenkachse 2 und dem Stützrahmen 13 erfolgt nach Art einer Pendelstützlagerung, d. h. im vorliegenden Ausführungsbeispiel mittels Kugelgelenken 14, 15. Somit können nur Kräfte in Längsrichtung übertragen werden.

Die Kraftübertragungs-Elemente 12 können blockierbar und/oder längenverstellbar sein. Darüber hinaus ist es möglich, die Federsteifigkeit und/oder die Dämpfungskonstante einstellbar auszuführen.

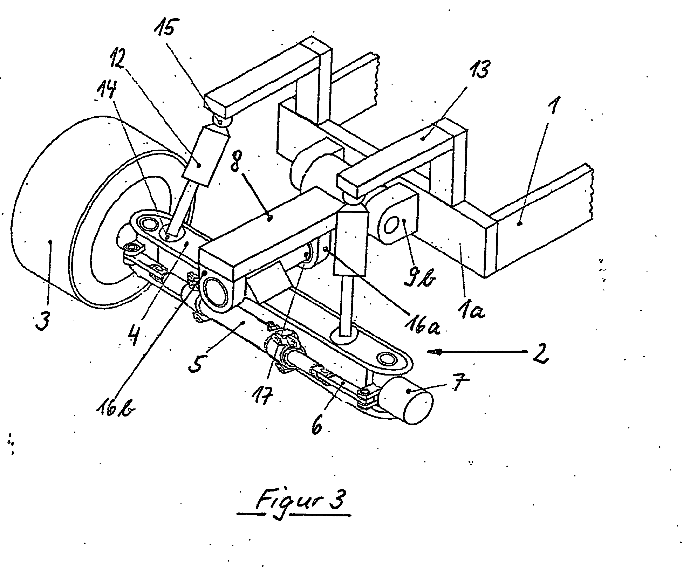

Das Ausführungsbeispiel nach Figur 2 stellt die Umkehr des in Figur 1 dargestellten Prinzips der in die Längsschwinge 8 integrierten Drehführung dar: Dabei ist die Rotoreinheit 11b als Zapfen ausgebildet, der in eine hohlzylindrische Ausnehmung der Statoreinheit 11a hineinragt und dort drehbar gelagert ist.

Das Ausführungsbeispiel gemäß Figur 3 unterscheidet sich von den vorhergehenden Ausführungsbeispielen dadurch, dass die Drehführung (Pendellagerung) nicht durch die konzentrische Anordnung eines Zapfens und eines Hohlzylinders gebildet ist, sondern an der Längsschwinge 8 ein Drehgelenk vorgesehen ist, das aus zwei Lagerböcken 16a und 16b und einem Längszapfen 17 besteht. Im vorliegenden Ausführungsbeispiel sind die Lagerböcke 16a und 16b mit der Längsschwinge 8 verbunden, während der Längszapfen 17 am Achskörper 4 der Lenkachse 2 befestigt ist.

## Patentansprüche

1. Flurförderzeug, insbesondere Gegengewichts-Gabeistapier, mit einer Lenkachse (2), die an einer Längsschwinge (8) befestigt und zusammen mit dieser um eine Fahrzeug-Querachse schwenkbar ist, wobei die Längsschwinge (8) eine Führung (11a, 11b) aufweist, die über einen rotatorischen Freiheitsgrad in Bezug auf eine Fahrzeug-Längsachse verfügt, **dadurch gekennzeichnet, dass** die Lenkachse (2) beiderseits der Fahrzeug-Längsachse jeweils mittels eines elastischen Kraftübertragungs-Elements (12) am Fahrzeugrahmen (1) oder einem mit dem Fahrzeugrahmen (1) verbundenen Stützrahmen (13) abgestützt ist.

2. Flurförderzeug nach Anspruch 1, **dadurch gekennzeichnet, dass** das Kraftübertragungs-Element (12) jeweils im Bereich des Achsendes mit der Lenkachse (2) verbunden ist.

3. Flurförderzeug nach Anspruch 1 oder 2, **dadurch gekennzeichnet, dass** das Kraftübertragungs-Element (12) blockierbar, insbesondere hydraulisch blockierbar ist.

4. Flurförderzeug nach einem der Ansprüche 1 bis 3, **dadurch gekennzeichnet, dass** das Kraftübertragungs-Element (12) längenverstellbar, insbesondere hydraulisch längenverstellbar ist.

5. Flurförderzeug nach einem der Ansprüche 1 bis 4, **dadurch gekennzeichnet, dass** die Federsteifigkeit und/oder die Dämpfungskonstante des Kraftübertragungs-Elements (12) einstellbar ist.

6. Flurförderzeug nach einem der Ansprüche 1 bis 5, **dadurch gekennzeichnet, dass** das Kraftübertragungs-Element (12) als Feder-Dämpfer-Einheit ausgebildet ist.

7. Flurförderzeug nach einem der Ansprüche 1 bis 6, **dadurch gekennzeichnet, dass** die Führung als Drehführung ausgebildet ist, die eine Statoreinheit (11a) und eine relativ dazu um die Fahrzeug-Längsachse drehbare Rotoreinheit (11b) aufweist, wobei die Rotoreinheit (11b) mit der Lenkachse (2) und die Statoreinheit (11 a) mit dem Fahrzeugrahmen (1) verbunden ist.

8. Flurförderzeug nach Anspruch 7, **dadurch gekennzeichnet, dass** die Statoreinheit (11a) mittels eines Gelenks (9), durch das sich die Fahrzeug-Querachse erstreckt, mit dem Fahrzeugrahmen (1) verbunden ist.

9. Flurförderzeug nach Anspruch 7 oder 8, **dadurch gekennzeichnet, dass** die Rotoreinheit (11b) eine hohlzylindrische Ausnehmung aufweist, in der ein zylindrischer Zapfen der Statoreinheit (11 b) gelagert ist.

10. Flurförderzeug nach Anspruch 7 oder 8, **dadurch gekennzeichnet, dass** die Rotoreinheit (11b) einen zylindrischen Zapfen aufweist, der in einer hohlzylindrischen Ausnehmung der Statoreinheit (11a) gelagert ist.

## Claims

1. Industrial truck, in particular counterbalance forklift truck, comprising a steering axle (2), which is fastened to a longitudinal rocker (8) and can be pivoted together therewith about a transverse axis of the vehicle, wherein the longitudinal rocker (8) has a guide (11a, 11b), which has a rotational degree of freedom in relation to a longitudinal axis of the vehicle, **characterised in that** the steering axle (2) is supported in each case, on either side of the longitudinal axis of the vehicle, by means of a resilient force transmission element (12), on the vehicle frame (1) or a support frame (13) connected to the vehicle frame (1).

2. Industrial truck according to claim 1, **characterised in that** the force transmission element (12) is connected in each case to the steering axle (2) in the region of the axle end.

3. Industrial truck according to claim 1 or 2, **characterised in that** the force transmission element (12) can be blocked, in particular can be hydraulically blocked.

4. Industrial truck according to any one of claims 1 to 3, **characterised in that** the force transmission element (12) is longitudinally adjustable, in particular hydraulically longitudinally adjustable.

5. Industrial truck according to any one of claims 1 to 4, **characterised in that** the spring stiffness and/or the damping constant of the force transmission element (12) is adjustable.

6. Industrial truck according to any one of claims 1 to 5, **characterised in that** the force transmission element (12) is configured as a spring-damper unit.

7. Industrial truck according to any one of claims 1 to 6, **characterised in that** the guide is configured as a rotary guide, which has a stator unit (11a) and a rotor unit (11b) which can be rotated relative thereto about the longitudinal axis of the vehicle, the rotor unit (11b) being connected to the steering axle (2) and the stator unit (11a) being connected to the vehicle frame (1).

8. Industrial truck according to claim 7, **characterised in that** the stator unit (11a) is connected to the vehicle frame (1) by means of an articulated joint (9), through which a transverse axis of the vehicle extends.

9. Industrial truck according to claim 7 or 8, **characterised in that** the rotor unit (11 b) has a hollow cylindrical recess, in which a cylindrical pin of the stator unit (11 a) is mounted.

10. Industrial truck according to claim 7 or 8, **characterised in that** the rotor unit (11 b) has a cylindrical pin, which is mounted in a hollow cylindrical recess of the stator unit (11a).

## Revendications

1. Chariot de manutention, notamment chariot élévateur à fourche, à contrepoids, comportant un essieu directeur (2) fixé à un bras oscillant longitudinal (8) et pivotant avec celui-ci autour d'un axe transversal du véhicule, le bras longitudinal (8) ayant un moyen de guidage (11a, 11b) avec un degré de liberté en rotation par rapport à l'axe longitudinal du véhicule,
**caractérisé en ce que**
l'essieu directeur (2) est appuyé des deux côtés de l'axe longitudinal du véhicule chaque fois par un élément de transmission de force (12) élastique sur le châssis (1) du véhicule ou sur un support (13) relié au châssis (1) du véhicule.

2. Chariot de manutention selon la revendication 1,
**caractérisé en ce que**
l'élément de transmission de force (12) est relié à l'essieu directeur (2) au niveau de l'extrémité de l'essieu.

3. Chariot de manutention selon la revendication 1 ou 2,
**caractérisé en ce que**
l'élément de transmission de force (12) peut être bloqué, notamment par un moyen hydraulique.

4. Chariot de manutention selon l'une des revendications 1 à 3,
**caractérisé en ce que**
l'élément de transmission de force (12) est réglable en longueur et notamment il est réglable hydrauliquement en longueur.

5. Chariot de manutention selon l'une des revendications 1 à 4,
**caractérisé en ce que**
la dureté de ressort et/ou la constante d'amortissement de l'élément de transmission de force (12) est réglable.

6. Chariot de manutention selon l'une des revendications 1 à 5,
**caractérisé en ce que**
l'élément de transmission de force (12) est un élément ressort-amortisseur.

7. Chariot de manutention selon l'une des revendications 1 à 6,
**caractérisé en ce que**
le moyen de guidage est un moyen de guidage en rotation comportant un stator (11a) et un rotor (11b) tournant par rapport au stator autour de l'axe longitudinal du véhicule, le rotor (11b) étant relié à l'essieu directeur (2) et le stator (11a) étant relié au châssis (1) du véhicule.

8. Chariot de manutention selon la revendication 7,
**caractérisé en ce que**
le stator (11a) est relié par une articulation (9) au châssis (1) du véhicule, cette articulation étant traversée par l'axe transversal du véhicule.

9. Chariot de manutention selon les revendications 7 ou 8,
**caractérisé en ce que**
le rotor (11b) comporte une cavité cylindrique creuse recevant un goujon cylindrique du stator (11b).

10. Chariot de manutention selon les revendications 7 ou 8,
**caractérisé en ce que**
le rotor (11b) comporte un goujon cylindrique logé dans une cavité cylindrique creuse du stator (11a).
